# EUROPÄISCHE PATENTSCHRIFT

(11) **EP 4 212 015 B1**
(45) Veröffentlichungstag und Bekanntmachung des Hinweises auf die Patenterteilung: **28.02.2024**
(21) Anmeldenummer: 22151590.1
(22) Anmeldetag: 14.01.2022
(51) Int. Cl.: A01K 39/01, A01K 39/012, A01K 5/02

(54) **HÜHNERFUTTERAUTOMAT**
FEED DEVICE FOR POULTRY
MANGEOIRE AUTOMATIQUE POUR VOLAILLE

(43) Veröffentlichungstag der Anmeldung: 19.07.2023
(73) Patentinhaber: Albert Kerbl GmbH, 84428 Buchbach (DE)
(72) Erfinder: KERBL, Ulli, 84428 Buchbach (DE); STROBEL, Yul, 88214 Ravensburg (DE)
(74) Vertreter: Kalkoff & Partner Patentanwälte mbB

(56) Entgegenhaltungen:
- DE-A1- 2 406 062
- DE-A1- 3 347 358
- US-A- 3 124 103
- US-A- 4 649 865

## Beschreibung

Die Erfindung betrifft einen Hühnerfutterautomat, mit einem einen Vorratsbereich zur Aufnahme von rieselfähigem Futter und einen mit dem Vorratsbereich verbundenen Ausgabebereich aufweisenden Vorratsbehälter und einem an dem Vorratsbehälter gelagerten Verschlusselement mit einem beabstandet zu dem Vorratsbehälter angeordneten Betätigungselement.

Hühnerfutterautomaten der eingangs genannten Art werden z.B. auf einer Weide oder in einem Stall aufgestellt. Dort dienen sie Hühnern als Futterquelle, an der dem Huhn über einen längeren Zeitraum ein Futtervorrat bereitgestellt wird, aus dem das Huhn bedarfsweise selbstständig Nahrung aufnehmen kann.

Hierzu weisen bekannte Hühnerfutterautomaten das Futter zur Entnahme bereitstellenden Ausgabebereich und einen mit diesem verbundenen Vorratsbereich zur Aufnahme von Futter, z.B. rieselfähigem Futter auf. Zum Schutz des Futtervorrats vor Verunreinigungen als auch vor Futterkonkurrenten, wie z.B. Ratten, Mäusen oder dergleichen, weisen Hühnerfutterautomaten der eingangs genannten Art ein den Ausgabebereich verschließendes Verschlusselement auf. Zur Öffnung des Verschlusselements ist üblicherweise ein Betätigungselement vorgesehen. Derzeit muss das Huhn, ein in der Nähe eines Bodens, auf dem der Hühnerfutterautomat steht, angeordnetes, als Platte ausgebildetes Betätigungselement betreten. Durch das Gewicht des Huhns neigt sich die nach unten schwenkbare Platte in Richtung auf den Boden und wirkt mechanisch mit an der Platte angeordneten Zug- und Hebelstangen zusammen, wodurch das Verschlusselement mechanisch geöffnet wird und somit den Ausgabebereich für die Entnahme des Futters freigibt.

Die DE 24 06 062 A1 zeigt beispielsweise einen solchen Futterautomaten mit einem Einfülltrichter für Körnerfutter und einem sich an den Einfülltrichter anschließenden Futtertrog. Oberhalb der Vorderwand bleibt eine Entnahme- oder Fressöffnung frei, die mittels eines in einer Schließstellung angeordneten plattenförmigen Verschlusselements abgedeckt ist. Vor der Fressöffnung ist eine Standfläche für Hühner schwenkbar gelagert und über eine mehrere Hebel und Schrauben aufweisende Hebelanordnung mit dem ebenfalls schwenkbar gelagerten Verschlusselement verbunden. Durch eine Belastung der Standfläche mit dem Gewicht eines zu fütternden Tieres wird das Verschlusselement über ein Zusammenwirken der verschiedenen Hebel der Hebelanordnung in eine Öffnungsstellung verlagert.

Bekannte Hühnerfutterautomaten weisen den Nachteil auf, dass der Einsatz von Zug- und Hebelstangen eine Vielzahl an Bauteilen erfordert, die sich jeweils zueinander abgestimmt bewegen müssen, um das Verschlusselement zu öffnen. Hierdurch sind bekannte Hühnerfutterautomaten fehler- und störanfällig, was die Zuverlässigkeit als autarke Futterquelle in einem Stall oder auf der Weide einschränkt.

Der Erfindung liegt daher die Aufgabe zugrunde, einen Hühnerfutterautomaten bereitzustellen, der bei einer kompakten Bauweise einen dauerhaften fehler- und störungsarmen Einsatz ermöglicht.

Die Erfindung löst die Aufgabe durch einen Hühnerfutterautomaten mit den Merkmalen des Anspruchs 1. Vorteilhafte Weiterbildungen der Erfindung sind in den abhängigen Ansprüchen angegeben.

Kennzeichnend für den erfindungsgemäßen Hühnerfutterautomaten ist, dass das Betätigungselement zur Verstellung des Verschlusselements aus der Schließstellung in die Öffnungsstellung in Richtung auf den Vorratsbehälter verstellbar ist.

Der Vorratsbehälter ist dazu ausgebildet, rieselfähiges Futter in dem Vorratsbereich aufzunehmen und dieses über die Verbindung des Vorratsbereichs mit dem Ausgabebereich einem Huhn für die Nahrungsaufnahme zur Verfügung zu stellen. Ferner weist der Vorratsbehälter eine an den Vorratsbereich angrenzende Einfüllöffnung zum Befüllen des Vorratsbereichs auf.

Der Vorratsbereich und der Ausgabebereich sind erfindungsgemäß derart miteinander verbunden, dass in dem Vorratsbereich aufgenommenes Futter in Richtung auf den Ausgabebereich nachrutscht, sobald ein Huhn Futter aus dem Ausgabebereich entnimmt.

Das Verschlusselement ist zum Schutz vor Fresskonkurrenten des Huhns, z.B. vor Ratten oder Mäusen, in einem unbelasteten Zustand des Betätigungselements in der Schließstellung angeordnet. In der Schließstellung ist das Verschlusselement erfindungsgemäß derart an dem Vorratsbehälter angeordnet, dass der Ausgabebereich des Vorratsbehälters durch das Verschlusselement verdeckt wird.

Das Betätigungselement ist erfindungsgemäß derart ausgebildet und/oder an dem Verschlusselement angeordnet, dass ein Huhn, das Betätigungselement mit einem Fuß verstellen kann. Zusätzlich ist das Betätigungselement derart an dem Verschlusselement angeordnet, dass die Verstellung des Betätigungselements relativ zu dem Vorratsbehälter das Verschlusselement zwischen der Schließstellung und der Öffnungsstellung um die Rotationsachse verschwenkt. Besonders bevorzugt bewirkt die Verstellung des Betätigungselements ein Schwenken des Verschlusselements um nur eine Rotationsachse in Richtung auf den Vorratsbereich des Vorratsbehälters. Das Verschlusselement ist in der Öffnungsstellung derart an dem Vorratsbehälter angeordnet, dass der Ausgabebereich für die Entnahme des Futters freigegeben wird.

Bei der Nutzung des Hühnerfutterautomaten verstellt, bevorzugt verschiebt das Huhn das Betätigungselement erfindungsgemäß in Richtung auf den Vorratsbehälter, sodass das Verschlusselement aus der Schließstellung in die Öffnungsstellung verstellt wird. Hierdurch wird der Ausgabebereich des Vorratsbehälters freigegeben und das Huhn kann Futter entnehmen. Über die Verbindung des Ausgabebereichs mit dem Vorratsbereich rutscht in Abhängigkeit von der Entnahmegeschwindigkeit, d.h. von der Geschwindigkeit, mit der das Huhn das Futter aus dem Ausgabebereich entnimmt, neues Futter nach.

Durch das Zusammenwirken des Betätigungselements und des Verschlusselements bei der Verstellung um die Rotationsachse zwischen der Öffnungs- und der Schließstellung ist nur eine geringe Anzahl an Bauteilen erforderlich, um den Ausgabebereich des Vorratsbehälters für das Huhn freizugeben. Zusätzlich wird durch die geringe Anzahl an Bauteilen das Risiko von Fehlern oder Störungen reduziert, sodass der Hühnerfutterautomat über einen langen Zeitraum, z.B. in einem Stall eingesetzt werden kann.

Zur Verstellung zwischen der Schließstellung und der Öffnungsstellung kann das Verschlusselement an dem Vorratsbehälter beispielsweise in Lagerelementen, z.B. in Wälzlagern und/oder in als Lagerabschnitten ausgebildeten Lagerelementen um die Rotationsachse schwenkbar gelagert sein. Die Lagerabschnitte können z.B. an dem Verschlusselement und/oder an dem Vorratsbehälter angeordnet sein. Beispielsweise weist der Vorratsbehälter einander gegenüberliegend angeordnete Seitenflächen mit Ausnehmungen zur Durchführung eines Befestigungsmittels, z.B. einer Schraube oder eines Gewindebolzens auf. Das Befestigungsmittel wirkt derart mit an dem Verschlusselement angeordneten Lagerabschnitten zusammen, dass das Verschlusselement um die Rotationsachse schwenkbar ist.

Das Betätigungselement kann zur Verstellung des Verschlusselements zwischen der Schließstellung und der Öffnungsstellung grundsätzlich in beliebiger Weise relativ zum Vorratsbehälter verstellt werden. Nach einer vorteilhaften Ausgestaltung der Erfindung ist jedoch vorgesehen, dass das Verschlusselement derart ausgebildet ist, dass das Betätigungselement bei der Verstellung zwischen einer der Öffnungsstellung zugeordneten Endstellung und einer der Schließstellung zugeordneten Ausgangsstellung auf einer Bewegungsbahn mit einem konstanten Abstand zu der Rotationsachse des Verschlusselements verstellbar ist. Bevorzugt erstreckt sich das Betätigungselement parallel zur Rotationsachse des Verschlusselements und ist besonders bevorzugt mit zwei beabstandet zueinander angeordneten Streben des Verschlusselements verbunden. Vorzugsweise sind die Streben des Verschlusselements flächig ausgebildet. Das Verschlusselement, insbesondere der Verschlussabschnitt und die Streben, und das Betätigungselement sind bevorzugt aus einem Kunststoffwerkstoff ausgebildet und besonders bevorzugt einstückig, z.B. als Spritzgussteil ausgebildet.

Je nach Huhn und/oder Größe des Hühnerfutterautomaten kann der Abstand zwischen dem Betätigungselement und dem Vorratsbehälter grundsätzlich beliebig gewählt werden. Für einen Hühnerfutterautomaten für ein Huhn ist das Betätigungselement vorzugsweise in der Ausgangsstellung senkrecht zur Rotationsachse gemessen in einem Abstand von maximal 140 mm, bevorzugt maximal 130 mm, besonders bevorzugt maximal 120 mm zum Vorratsbehälter angeordnet. Zusätzlich ist das Betätigungselement vorzugsweise in der Endstellung senkrecht zur Rotationsachse gemessen beispielsweise in einem Abstand von maximal 60 mm, bevorzugt maximal 55 mm, besonders bevorzugt maximal 50 mm zum Vorratsbehälter angeordnet.

Die Bewegungsbahn des Betätigungselements weist z.B. eine bogenartige und/oder teilkreisartige Form auf. Besonders bevorzugt erstreckt sich die Bewegungsbahn des Betätigungselements in einer senkrecht zu der Rotationsachse angeordneten Vertikalebene. Der Vorratsbehälter ist bevorzugt spiegelsymmetrisch zu der Vertikalebene ausgebildet. Durch diese vorteilhafte Ausgestaltung des Betätigungselements und dem weiteren Zusammenwirken mit dem Verschlusselement wird eine besonders kompakte Bauweise ermöglicht. Darüber hinaus reduziert insbesondere die bevorzugte einstückige Ausgestaltung des Betätigungselements und des Verschlusselements weiter das Risiko von Fehlern oder Störungen des Hühnerfutterautomaten.

Der Vorratsbehälter ist bevorzugt derart ausgebildet, dass ein Huhn wenigstens seinen Kopf zur Entnahme des Futters in den Ausgabebereich hinein bewegen kann. Beispielsweise weist der Vorratsbehälter eine an den Ausgabebereich angrenzende fensterartige Entnahmeöffnung auf. Das Verschlusselement ist vorzugsweise derart ausgebildet, dass ein die Entnahmeöffnung des Vorratsbehälters in der Schließstellung verschließender Verschlussabschnitt des Verschlusselements bei der Verstellung zwischen der Schließ- und der Öffnungsstellung innerhalb des Ausgabebereichs des Vorratsbehälters angeordnet ist. Der Verschlussabschnitt ist beispielsweise flächig ausgebildet und weist bevorzugt eine Krümmung auf, wobei eine Krümmungsachse, auf der ein Mittelpunkt der Krümmung angeordnet ist, besonders bevorzugt parallel zu der Rotationsachse des Verschlusselements angeordnet ist.

Nach einer vorteilhaften Ausgestaltung der Erfindung ist vorgesehen, dass das Verschlusselement ein in der Öffnungsstellung an dem Vorratsbehälter anliegendes Anschlagselement aufweist. Das Anschlagselement ist derart ausgebildet, dass das Verschlusselement in der Öffnungsstellung vorzugsweise seitlich, d.h. gesehen in Richtung der Rotationsachse, des Ausgabebereichs mit dem Anschlagselement an dem Vorratsbehälter anliegt. Bevorzugt weist das Verschlusselement zwei jeweils an einem der flächigen Streben angeordnete Anschlagselemente auf. Das Anschlagselement ist beispielsweise als eine Abkantung der flächigen Strebe ausgebildet. Durch das Anschlagselement kann auf vorteilhafte Weise ein Verstellen des Verschlusselements über die Öffnungsstellung hinaus verhindert werden, wodurch das Verschlusselement nicht schwungartig gegen das Trennelement verstellt werden kann und somit das Risiko einer auf einem defekten Trennelement oder einem defekten Verschlusselement basierenden Störung weiter reduziert werden kann.

Die Verbindung zwischen dem Vorratsbereich und dem Ausgabebereich des Vorratsbehälters kann grundsätzlich in beliebiger Art und Weise gestaltet sein. Nach einer vorteilhaften Weiterbildung der Erfindung ist jedoch vorgesehen, dass der Vorratsbehälter ein den Vorratsbereich von dem Ausgabebereich abgrenzendes Trennelement aufweist. Das Trennelement ist derart ausgebildet, dass der Vorratsbereich und der Ausgabebereich bis auf eine den Vorratsbereich mit dem Ausgabebereich verbindende Öffnung räumlich voneinander getrennt sind. Das Trennelement ist z.B. zumindest teilweise plattenartig ausgebildet und weist vorzugsweise mindestens eine bevorzugt parallel zur Rotationsachse angeordnete Biegung auf.

Ferner ist das vorteilhafterweise vorgesehene Trennelement in dem Vorratsbehälter angeordnet und bevorzugt lösbar, besonders bevorzugt formschlüssig mit dem Vorratsbehälter verbindbar. Hierzu weist das Trennelement beispielsweise mehrere mit an dem Vorratsbehälter angeordneten Vorsprüngen bevorzugt formschlüssig in Wirkverbindung bringbare Aufnahmeabschnitte auf. Bevorzugt weist das Trennelement mindestens zwei besonders bevorzugt mindestens drei Aufnahmeabschnitte auf. Darüber hinaus ist das Trennelement z.B. aus einem Kunststoffwerkstoff und bevorzugt als Spritzgussteil ausgebildet. Durch das Trennelement kann der Vorratsbereich auf vorteilhafte Weise einfach bis auf die Öffnung von dem Ausgabebereich getrennt werden. Dadurch dass das Trennelement bevorzugt formschlüssig mit dem Vorratsbehälter verbindbar ist, kann der Hühnerfutterautomat selbst im unwahrscheinlichen Fall einer Störung einfach und schnell für eine Wartung demontiert werden.

Die Öffnung zwischen dem Vorratsbereich und dem Ausgangsbereich ist ein sich bevorzugt senkrecht zur Rotationsachse des Verschlusselements und/oder parallel zu der Vertikalebene erstreckender freier Bereich, an dem der Vorratsbereich in den Ausgangsbereich übergeht. Die Öffnung kann grundsätzlich beliebig, z.B. mit einer konstanten Größe ausgebildet sein. Gemäß einer vorteilhaften Ausgestaltung der Erfindung ist jedoch vorgesehen, dass das Trennelement ein Verstellelement aufweist, dass derart gegenüber dem Vorratsbehälter verstellbar ist, dass die den Ausgabebereich mit dem Vorratsbereich verbindende Öffnung zur Anpassung der Rieselfähigkeit des Futters verkleinert und/oder vergrößert werden kann. Das Verstellelement ist vorzugsweise stufenlos gegenüber dem Vorratsbehälter verstellbar. Bevorzugt ist das Verstellelement derart an dem Trennelement angeordnet, dass das Verstellelement parallel zu einer Längsachse des Vorratsbehälters verstellt wird, wodurch eine Querschnittsfläche der Öffnung verkleinert und/oder vergrö-ßert wird. Die Öffnung weist in Abhängigkeit von der Ausgestaltung des Vorratsbehälters und des Trennelements eine bevorzugt polygonförmige, z.B. rechteckige Querschnittsfläche auf.

Beispielsweise ist die Höhe einer z.B. rechteckigen Querschnittsfläche der Öffnung durch eine Verstellung des Verstellelements in Richtung auf die Einfüllöffnung des Vorratsbehälters vergrößerbar und in eine der Einfüllöffnung entgegengerichtete Richtung verkleinerbar. Bevorzugt ist das Verstellelement mit einem Befestigungsmittel, z.B. einer Schraube an dem Trennelement festlegbar. Bei einer größeren Öffnung zwischen Vorratsbereich und Ausgabebereich wird die Rieselfähigkeit des Futters erhöht und entsprechend bei einer kleineren Öffnung verringert. Das vorteilhaft an dem Trennelement vorgesehene Verstellelement ermöglicht bei Einhaltung einer kompakten Bauweise des Hühnerfutterautomaten auch die Einstellbarkeit der von dem Vorratsbereich in den Ausgabebereich förderbaren Futtermenge.

Bevorzugt ist das Betätigungselement durch eine durch das zumindest teilweise, z.B. mit einem Fuß auf dem Betätigungselement stehenden Huhn ausgeübte Kraft solange in der Endstellung festlegbar, wie das Huhn diese Kraft aufrechterhält. Hierdurch kann das Verschlusselement durch die von dem Huhn auf das Betätigungselement ausgeübte Kraft, beispielsweise eine Gewichtskraft in der Öffnungsstellung festgelegt werden.

Das Verschlusselement kann derart ausgebildet sein, dass sich das Verschlusselement, sobald das Huhn die Futterentnahme beendet und sich von dem Betätigungselement entfernt, durch sein Eigengewicht und seinen Schwerpunkt von selbst von der Öffnungsstellung in die Schließstellung verstellt. Nach einer vorteilhaften Weiterbildung der Erfindung ist jedoch vorgesehen, dass das Verschlusselement in Richtung auf die Schließstellung vorgespannt ist. Hierzu kann an dem Vorratsbehälter und/oder dem Verschlusselement mindestens ein Federelement und/oder ein Beschwerelement vorgesehen sein. Das Federelement, z.B. eine Torsionsfeder, insbesondere eine Schenkelfeder oder eine Druckfeder ist bevorzugt an dem Verschlusselement, besonders bevorzugt koaxial zur Rotationsachse des Verschlusselements angeordnet. Das Beschwerelement, z.B. ein Gewicht ist bevorzugt an dem Trennelement und besonders bevorzugt im Vorratsbereich des Vorratsbehälters angeordnet. Die erforderliche Kraft, um das Betätigungselement aus der Ausgangsstellung in die Endstellung zu verstellen, kann durch die Drehfeder, z.B. eine Kraft der Drehfeder und/oder durch das Beschwerelement, z.B. eine Masse des Gewichts, so abgestimmt werden, dass das Verschlusselement über den sich durch die beabstandete Anordnung des Betätigungselements ergebenden Hebel bevorzugt nur von einem Huhn oder einem Tier mit einem gleichen und/oder größeren Gewicht geöffnet werden kann. Hierdurch kann die erforderliche Betätigungskraft so angepasst werden, dass sichergestellt ist, dass kleinere Fresskonkurrenten keinen Zugang zu dem Ausgabebereich und somit keinen Zugang zu dem Futter haben. Die vorteilhafte Weiterbildung der Erfindung gewährleistet ferner auch bei einem ungünstig liegenden Schwerpunkt des Verschlusselements ein sicheres Verschließen des Ausgabebereichs, insbesondere der Entnahmeöffnung des Vorratsbehälters, wodurch das Risiko von Störungen, insbesondere die Verschlusseinheit betreffende Störungen noch weiter reduziert werden kann.

Nach einer vorteilhaften Weiterbildung der Erfindung ist vorgesehen, dass der Hühnerfutterautomat ein das Verschlusselement in der Öffnungsstellung gegenüber dem Vorratsbehälter, insbesondere dem Trennelement, festlegendes Blockierelement aufweist. Das Blockierelement ist an dem Verschlusselement und/oder dem Trennelement angeordnet. Zusätzlich ist das Blockierelement bevorzugt derart ausgebildet, dass das Verschlusselement mit nur einem Handgriff gegenüber dem Trennelement festgelegt werden kann. Besonders bevorzugt ist das Blockierelement drehbar ausgebildet. Das Blockierelement ist zwischen einer das Verschlusselement gegenüber dem Vorratsbehälter, insbesondere dem Trennelement festlegenden Sperrstellung und einer das Verschlusselement freigebenden Freigabestellung verstellbar, bevorzugt verdrehbar.

Bevorzugt ist das Blockierelement an dem Trennelement angeordnet und wirkt besonders bevorzugt mit einer an dem Verschlusselement, insbesondere an dem Verschlussabschnitt angeordneten Durchlassöffnung zusammen. Das Blockierelement weist eine z.B. polygon-oder bevorzugt ellipsenförmige Außenkontur auf. Die Durchlassöffnung ist ein freier Ausschnitt auf dem Verschlusselement und weist eine an die Außenkontur des Blockierelements angepasste Innenkontur auf. Beispielsweise ist die Durchlassöffnung als Langloch ausgebildet. Bei der Verstellung des Verschlusselements zwischen der Schließstellung und der Öffnungsstellung wird das in der Freigabestellung angeordnete Blockierelement durch die Durchlassöffnung hindurchgeführt. Sobald das Verschlusselement in der Öffnungsstellung angeordnet ist, ist das Blockierelement von der Freigabestellung in die Sperrstellung verstellbar, bevorzugt verdrehbar. In der Sperrstellung wird die Verstellung des Verschlusselements von der Öffnungsstellung in die Schließstellung durch das Blockierelement verhindert. Durch das Blockierelement kann auf vorteilhafte Weise ermöglicht werden, ein ein Huhn, beispielsweise bei einer Neubesatzung einer Stallung anzulocken und für die Verwendung des Hühnerfutterautomaten anzulernen, wodurch das Risiko von Verletzungen des Huhns reduziert und damit einhergehende Störungen des Hühnerfutterautomaten verhindert werden können.

Das an dem Trennelement angeordnete Verstellelement kann grundsätzlich ausreichen, um die von dem Vorratsbereich in den Ausgabebereich zu fördernde Futtermenge einzustellen. Nach einer äußerst vorteilhaften Weiterbildung der Erfindung ist jedoch vorgesehen, dass der Hühnerfutterautomat eine an dem Vorratsbehälter, bevorzugt in dem Vorratsbereich anordbare Dosiereinheit aufweist. Bevorzugt ist die Dosiereinheit werkzeuglos, besonders bevorzugt kraftschlüssig und/oder formschlüssig mit dem Vorratsbehälter verbindbar. Die Dosiereinheit weist bevorzugt einen beispielsweise quaderartig ausgebildeten Grundkörper auf. Beispielsweise ist der Grundkörper derart ausgebildet, dass sich die an dem Vorratsbehälter, bevorzugt in dem Vorratsbereich angeordnete Dosiereinheit in einem lösbaren Pressverband mit dem Vorratsbehälter befindet. Besonders bevorzugt ist die Dosiereinheit in Richtung der Längsachse des Vorratsbehälters beabstandet zu der zwischen dem Vorratsbereich und dem Ausgabebereich angeordneten Öffnung angeordnet.

Die Dosiereinheit ist derart ausgebildet, dass das rieselfähige Futter in Abhängigkeit einstellbarer Parameter, z.B. einer Uhrzeit, der Menge des Futters, einer Fördergeschwindigkeit, von dem Vorratsbereich in den Ausgabebereich gefördert wird. Bevorzugt weist die Dosiereinheit mindestens ein, bevorzugt parallel zu der Rotationsachse und/oder senkrecht zu der Vertikalebene angeordnetes Rotationselement zur Förderung des Futters aus dem Vorratsbereich in den Ausgabebereich auf. Das Rotationselement ist zylinderartig ausgebildet und weist vorzugsweise einen sich in Richtung seiner Längsachse zwischen zwei Stirnflächen erstreckenden, z.B. ellipsenförmigen, polygonalen oder bevorzugt kreisförmigen Querschnitt auf. Zusätzlich ist das Rotationselement an der Dosiereinheit vorzugsweise im Bereich der Stirnflächen in Lagerelementen, z.B. Wälz- oder Gleitlager, um die Längsachse des Rotationselements rotierbar gelagert. Bevorzugt grenzen die Stirnflächen des Rotationelements jeweils an ein Lagerelement an. Der Grundkörper der Dosiereinheit weist bevorzugt mindestens eine dem Rotationselement zugeordnete trichterförmige Rieselöffnung auf.

Ferner weist das Rotationselement bevorzugt einen Hohlraum mit einem sich entlang der Längsachse des Rotationselements zwischen zwei jeweils beabstandet zu den Stirnflächen angeordneten Innenflächen erstreckenden Querschnitt auf. Der Hohlraum ist ein freier Bereich des Rotationselements, der dazu ausgebildet ist, das Futter innerhalb des Vorratsbereichs aufzunehmen und dosiert an die Öffnung zwischen dem Vorratsbereich und dem Ausgabebereich abzugeben. Der Hohlraum ist in radialer Richtung der Längsachse des Rotationelements zur Aufnahme des Futters von der Rieselöffnung offen ausgebildet. Das Rotationselement weist vorzugsweise mindestens ein den Hohlraum in zumindest zwei Aufnahmekammern für das rieselfähige Futter aufteilendes Teilelement auf. Das Teilelement ist z.B. in Form einer stangenförmigen Strebe oder bevorzugt als Trennwand ausgebildet. Ferner kann das Trennelement beispielsweise in Richtung der Längsachse des Rotationselements und/oder senkrecht zu der Längsachse des Rotationselements angeordnet sein.

Besonders bevorzugt weist die Dosiereinheit zwei in Richtung der Rotationsachse beabstandet zueinander angeordnete Rotationselemente auf. Zum Antrieb des Rotationselements oder der Rotationselemente weist die Dosiereinheit eine Antriebseinheit, bspw. einen Elektromotor auf. Für die Führung eines die Antriebseinheit versorgenden Stromkabels aus dem Vorratsbereich nach außen ist an dem Vorratsbehälter bevorzugt eine Durchführöffnung, beispielsweise in Form einer Bohrung angeordnet. Durch die äußerst vorteilhaft vorgesehene Dosiereinheit kann die Futtermenge exakter eingestellt und in Abhängigkeit verschiedener Parameter von dem Vorratsbereich in Richtung des Ausgabebereichs gefördert werden.

Zur Einstellung der Parameter ist die Dosiereinheit mit einer Steuereinheit verbunden. Die Steuereinheit ist vorzugsweise als programmierbare Einheit, z.B. als Computer, als SPS oder in Form einer externen und/oder übergeordneten Steuerung ausgebildet. Bevorzugt weist der Hühnerfutterautomat ein Sensorelement zur Überwachung des Füllstands des Vorratsbereichs auf. Dieses Sensorelement ist bevorzugt in dem Vorratsbereich angeordnet und beispielsweise in Form einer Lichtschranke, jedoch besonders bevorzugt als kapazitiver Sensor ausgebildet. Ferner kann der Hühnerfutterautomat auch weitere Sensorelemente, z.B. zur Überwachung der Temperatur und/oder zur Überwachung der Feuchtigkeit des Futters aufweisen. Das oder die Sensorelemente stehen mit der Steuereinheit zur Weiterleitung der erfassten Daten in Verbindung. Die Steuereinheit steht bevorzugt mit einem Steuermittel zur Steuerung des oder der Rotationsmittel in Verbindung. Bevorzugt ist die Steuereinheit derart ausgebildet, dass sie in Abhängigkeit von Sensorsignalen ein vorgebbares Programm ausführt. Das vorgebbare Programm weist bevorzugt Einstellungsmöglichkeiten für die Uhrzeit, die Menge des Futters und/oder die Fördergeschwindigkeit, d.h. die Rotationsgeschwindigkeit des oder der Rotationselemente auf. Ferner ist die Steuereinheit innerhalb des Vorratsbehälter oder bevorzugt separat, d.h. im Abstand zu dem Vorratsbehälter angeordnet. Die Dosiereinheit ist für den Fall einer separaten Steuereinheit beispielsweise über das aus dem Vorratsbehälter geführte Stromkabel mit der Steuereinheit verbindbar.

Nach einer vorteilhaften Ausgestaltung der Erfindung ist vorgesehen, dass das Betätigungselement eine Profilierung aufweist. Die Profilierung ist derart ausgebildet, dass das Huhn, das Betätigungselement aufgrund eines höheren Widerstands besser betätigen kann. Zur Erhöhung des Widerstands für das Huhn kann die Profilierung z.B. reibungswiderstanderhöhend und/oder formwiderstanderhöhend ausgebildet sein. Die Profilierung ist beispielsweise als eine auf dem Betätigungselement angeordnete reibwerterhöhende Klebeschicht oder bevorzugt als Formelement z.B. in Form einer Vertiefung und/oder besonders bevorzugt als Erhebung auf dem Betätigungselement ausgebildet. Durch die Profilierung des Betätigungselements kann auf vorteilhafte Weise der Widerstand zwischen dem Betätigungselement und dem Huhn, insbesondere dem Fuß des Huhns erhöht und die Verstellung des Betätigungselements relativ zum Vorratsbehälter vereinfacht werden.

Der Vorratsbereich ist vorzugsweise als ein bis auf die Verbindung zum Ausgabebereich und die Einfüllöffnung abgegrenzter Innenraum des Vorratsbehälters ausgebildet. Der Vorratsbehälter weist bevorzugt einen sich entlang einer Längsachse des Vorratsbehälters erstreckenden, z.B. kreisförmigen, ellipsenförmigen oder polygonalen Querschnitt auf. Bevorzugt weist der Hühnerfutterautomat einen die Einfüllöffnung abdeckenden Deckel zum Schutz vor Verunreinigungen auf.

Der Vorratsbereich des Vorratsbehälters reicht grundsätzlich aus, um genügend Futter für einen längeren Zeitraum aufzunehmen. Nach einer vorteilhaften Weiterbildung der Erfindung ist jedoch vorgesehen, dass der Hühnerfutterautomat eine den Vorratsbereich des Vorratsbehälters erweiternde Speichereinheit aufweist. Die Speichereinheit ist derart ausgebildet, das Volumen des Vorratsbereichs zu erhöhen, sodass eine größere Futtermenge aufgenommen werden kann. Die Speichereinheit ist bevorzugt derart an die Form des Vorratsbehälters angepasst, dass die Speichereinheit im Bereich der Einfüllöffnung an dem Vorratsbehälter anordbar und besonders bevorzugt lösbar, z.B. formschlüssig mit dem Vorratsbehälter verbindbar ist. Durch die Speichereinheit kann das Fassungsvermögen des Hühnerfutterautomaten auf vorteilhafte Weise erhöht werden, wodurch die Standzeit des Hühnerfutterautomaten in einem Stall oder auf der Weide verlängert wird.

Der Vorratsbehälter ist bevorzugt zur formschlüssigen Verbindung mit der Speichereinheit ausgebildet. Der Vorratsbereich und der Ausgabebereich sind bevorzugt durch ein besonders bevorzugt einstückig gefertigtes Gehäuse des Vorratsbehälters ausgebildet. Das Gehäuse ist vorzugsweise aus einem Kunststoffwerkstoff gebildet und bevorzugt als Spritzgussteil ausgebildet. Der Deckel des Vorratsbehälters ist entsprechend auf einer an der Speichereinheit angeordneten weiteren Einfüllöffnung anordbar. Zur Platzierung auf einer Weide oder bevorzugt in einem Stall kann der Vorratsbehälter, insbesondere das Gehäuse Bohrungen zum Aufhängen an einer Wand oder einem Zaun aufweisen und/oder zusätzlich eine Führungsnut zur Bildung einer Steckverbindung aufweisen. Die Ausbildung des Vorratsbehälters als Spritzgussteil ermöglicht eine noch kompaktere Bauweise und eine einfachere Herstellung des Hühnerfutterautomaten.

Nach einer vorteilhaften Weiterbildung der Erfindung weist der Vorratsbehälter im Ausgabebereich mindestens ein, besonders bevorzugt rippenartig ausgebildetes Stützelement auf. Das Stützelement ist bevorzugt senkrecht zu der Rotationsachse des Verschlusselements angeordnet. Zusätzlich ist das Stützelement bevorzugt einstückig, beispielsweise stoffschlüssig, z.B. mittels einer Schweißverbindung mit dem Vorratsbehälter verbunden und/oder einstückig mit dem Vorratsbehälter hergestellt worden. Vorzugsweise sind im Ausgabebereich des Vorratsbehälters verschiedene Stützelemente mit unterschiedlichen Größen, beispielsweise mit verschiedenen sich bevorzugt parallel zur Rotationsachse des Verschlusselements erstreckenden Querschnitten angeordnet. Durch das vorteilhaft vorgesehene Stützelement wird der Vorratsbehälter zumindest im Ausgabebereich verstärkt, wodurch z.B. ein mechanisches Versagen des Vorratsbehälters betreffende Störungen zusätzlich vorgebeugt werden können.

Ein Ausführungsbeispiel der Erfindung wird nachstehend mit Bezug auf die Zeichnungen erläutert. In den Zeichnungen zeigen:
- Fig. 1: eine perspektivische Ansicht eines Hühnerfutterautomaten mit einem in einer Schließstellung angeordneten Verschlusselement;
- Fig. 2: eine perspektivische Ansicht des Hühnerfutterautomaten von Fig. 1 mit dem in einer Öffnungsstellung angeordneten Verschlusselement;
- Fig. 3: eine Frontansicht des Hühnerfutterautomaten von Fig. 1 und Fig. 2;
- Fig. 4: eine Schnittansicht des Hühnerfutterautomaten aus Fig 1 bis 3 entlang der Linie A-A;
- Fig. 5: eine Frontansicht einer zweiten Ausführungsform des Hühnerfutterautomaten mit einer Speichereinheit und einer Dosiereinheit;
- Fig. 6: eine Schnittansicht des Hühnerfutterautomaten mit eingesetzter Dosiereinheit aus Fig 5 entlang der Linie B-B und
- Fig. 7: eine perspektivische Ansicht der Dosiereinheit des Hühnerfutterautomaten von Fig. 5 und 6.

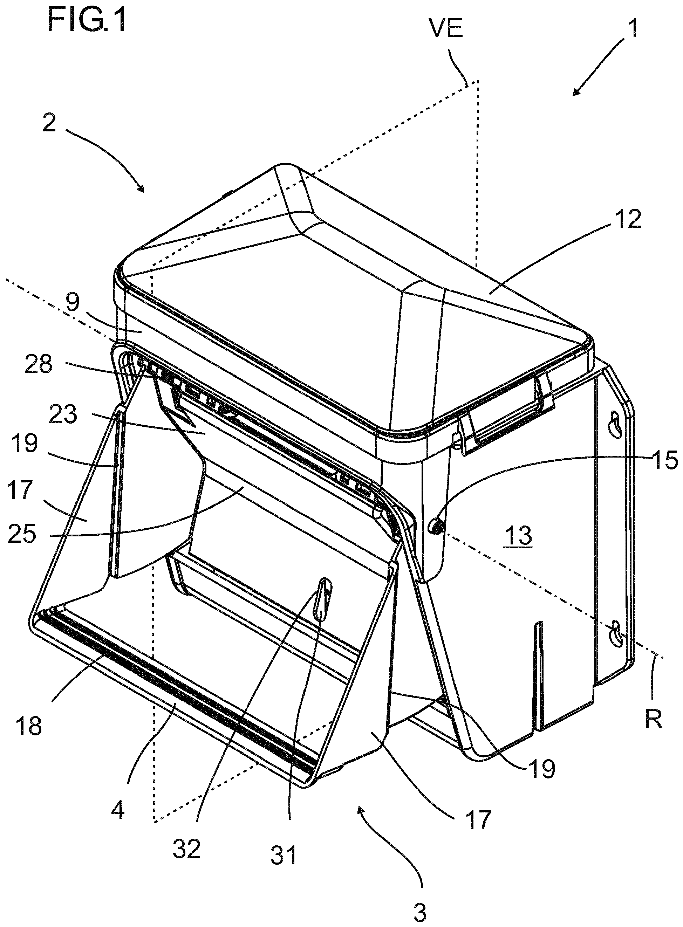

In Fig. 1 ist ein Hühnerfutterautomat 1mit einem Vorratsbehälter 2 und einem Verschlusselement 3 dargestellt. Das Verschlusselement 3 ist an dem Vorratsbehälter 2 um eine Rotationsachse R schwenkbar gelagert und weist ein beabstandet zu dem Vorratsbehälter 2 angeordnetes Betätigungselement 4 auf.

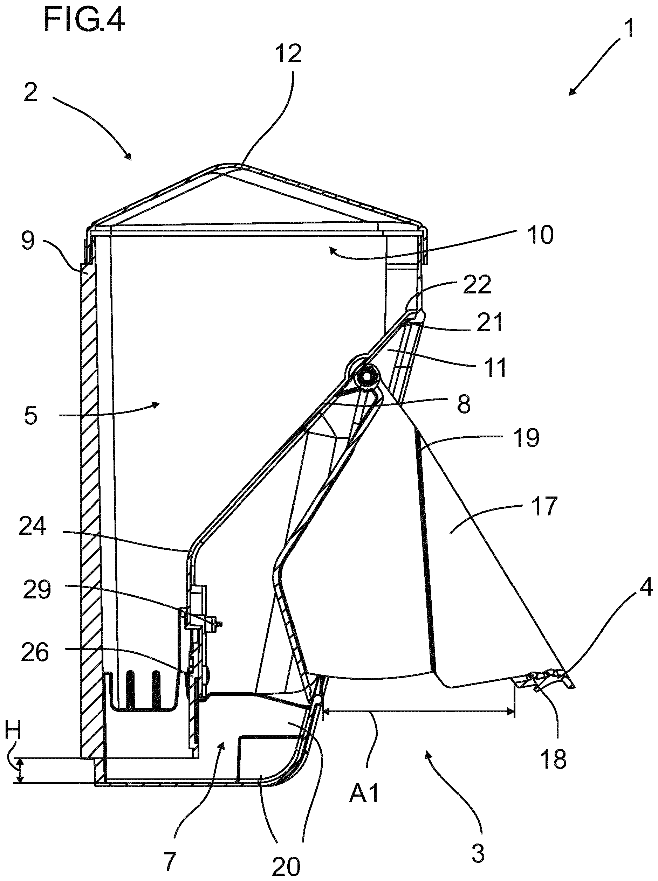

Der Vorratsbehälter 2 weist einen Vorratsbereich 5 zur Aufnahme von rieselfähigem Futter und einen mit dem Vorratsbereich 5 über eine Öffnung 6 verbundenen Ausgabebereich 7 auf (vgl. Fig. 4). In dem Vorratsbehälter 2 ist zusätzlich ein den Vorratsbereich 5 bis auf die Öffnung 6 von dem Ausgabebereich 7 abgrenzendes Trennelement 8 angeordnet. Ferner weist der Vorratsbehälter 2 ein Gehäuse 9 mit einem sich entlang einer Längsachse LV des Vorratsbehälters 2 erstreckenden rechteckförmigen Querschnitt auf. Der Vorratsbereich 5 und der Ausgabebereich 7 sind durch das einstückig als Spritzgussteil gefertigte Gehäuse 9 ausgebildet.

Der Vorratsbehälter 2 weist eine an den Vorratsbereich 5 angrenzende Einfüllöffnung 10 und eine an den Ausgabebereich 7 angrenzende fensterartige Entnahmeöffnung 11 auf. Der Hühnerfutterautomat 1 weist einen die Einfüllöffnung 10 abdeckenden Deckel 12 zum Schutz vor Verunreinigungen auf.

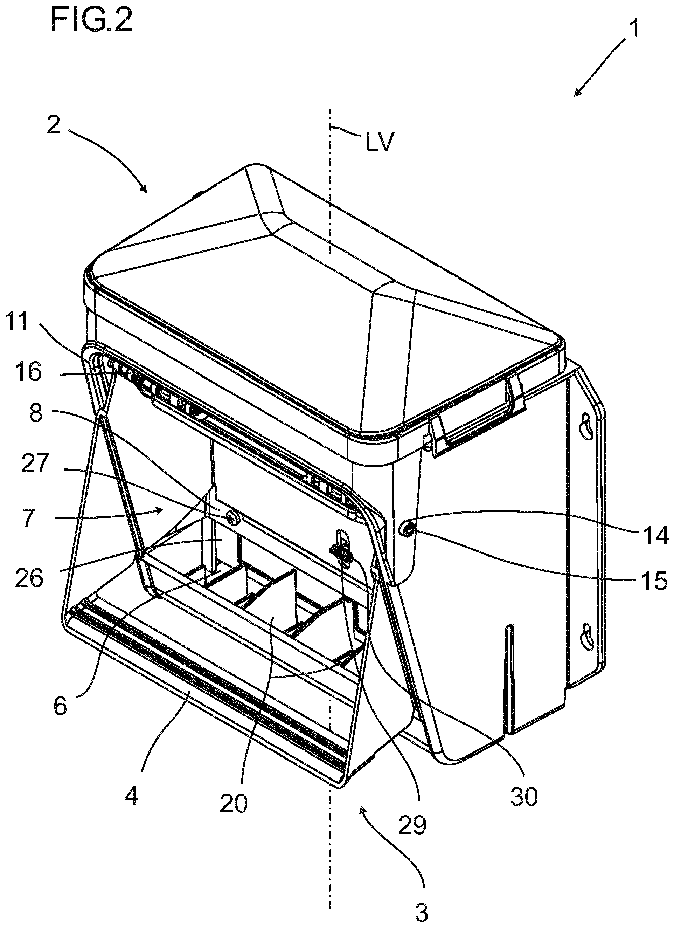

Weiter weist der Vorratsbehälter 2 an zwei gegenüberliegend an dem Gehäuse 9 angeordneten Seitenflächen 13 jeweils eine Ausnehmung 14 zur Durchführung eines als Schraube 15 ausgebildeten Befestigungsmittels auf. An dem Verschlusselement 3 sind zwei Lagerelemente in Form von Lagerabschnitten 16 angeordnet, die mit den Schrauben 15 zusammenwirken, sodass das Verschlusselement 3 um die Rotationsachse R schwenkbar ist. Das Verschlusselement 3 ist zwischen einer in Fig. 1 dargestellten Schließstellung und einer in Fig.2 dargestellten Öffnungsstellung verstellbar. Zum Schutz vor Fresskonkurrenten der Hühner, z.B. vor Ratten oder Mäusen ist das Verschlusselement 3 in einem unbelasteten Zustand des Betätigungselements 4 in der Schließstellung angeordnet. In der Schließstellung ist das Verschlusselement 3 derart an dem Vorratsbehälter 2 angeordnet, dass die Entnahmeöffnung 11 durch einen Verschlussabschnitt 23 des Verschlusselements 3 verdeckt wird.

Das Betätigungselement 4 erstreckt sich parallel zur Rotationsachse R zwischen zwei beabstandet zueinander angeordneten flächigen Streben 17 des Verschlusselements 3.Über die flächigen Streben 17 ist der Verschlussabschnitt 23 einstückig mit dem Betätigungselement 4 verbunden. Ferner weist das Betätigungselement 4 eine Profilierung in Form von zwei Erhebungen 18 auf. An den flächigen Streben 17 ist jeweils ein Anschlagselement in Form einer Abkantung 19 angeordnet, mit denen das Verschlusselement 3 in der Öffnungsstellung an dem Vorratsbehälter 2 seitlich der fensterartigen Entnahmeöffnung 11 anliegt.

Das Betätigungselement 4 ist bei der Verstellung des Verschlusselements 3 zwischen einer der Öffnungsstellung zugeordneten Endstellung (vgl. Fig. 1) und einer der Schließstellung zugeordneten Ausgangsstellung (vgl. Fig. 2) auf einer teilkreisförmigen Bewegungsbahn verstellbar. Das Betätigungselement 4 ist gemessen senkrecht zu der Rotationsachse R in der Ausgangsstellung in einem Abstand A1 von maximal 120 mm zum Vorratsbehälter 2 angeordnet und in der Endstellung in einem Abstand A2 von maximal 50 mm zum Vorratsbehälter 2 angeordnet. Der Abstand A1 ist exemplarisch für die Abstände A1 und A2 in Fig.4 dargestellt. Die Bewegungsbahn des Betätigungselements 4 erstreckt sich in einer senkrecht zu der Rotationsachse R angeordneten Vertikalebene VE. Der Vorratsbehälter 2 ist spiegelsymmetrisch zu der Vertikalebene VE ausgebildet.

Weiter weist der Vorratsbehälter 2 gemäß Fig. 4 mehrere rippenartig ausgebildete Stützelemente 20 auf. Die Stützelemente 20 sind senkrecht zu der Rotationsachse R des Verschlusselements 3 angeordnet und einstückig mit dem Gehäuse 9 des Vorratsbehälters 2 verbunden.

Das Trennelement 8 weist drei in Richtung der Rotationsachse R des Verschlusselementes 3 beabstandet zueinander angeordnete Aufnahmeabschnitte 21 (in Fig. 4 nur angedeutet) auf. Die Aufnahmeabschnitte 21 sind formschlüssig mit an dem Vorratsbehälter 2 angeordneten Vorsprüngen 22 verbunden. Zusätzlich weist das Trennelement 8 eine parallel zur Rotationsachse R angeordnete Biegung 24 auf. Der Verschlussabschnitt 23 des Verschlusselements 3 weist eine parallel zur Rotationsachse Rangeordnete Krümmung 25 auf.

Ferner weist das Trennelement 8 ein parallel zur Längsachse LV des Vorratsbehälters 2 und der Vertikalebene VE verstellbares Verstellelement 26 auf. Das Verstellelement 26 ist mit einem als Schraube ausgebildeten Befestigungsmittel 27 an dem Trennelement 8 festgelegt. Die zwischen dem Vorratsbereich 5 und dem Ausgabebereich 7 angeordnete Öffnung 6 weist eine rechteckig parallel zur Rotationsachse R angeordnete Querschnittsfläche mit einer Höhe H auf, die durch eine Verstellung des Verstellelements 26 vergrö-ßerbar oder verkleinerbar ist, wodurch die Rieselfähigkeit des Futters anpassbar ist.

Weiter ist das Verschlusselement 3 gemäß Fig. 1 und 2 durch zwei an dem Verschlusselement 3 koaxial zu der Rotationsachse R angeordnete Federelemente in Form von Schenkelfedern 28 in Richtung auf die Schließstellung vorgespannt.

An dem Trennelement 8 ist zusätzlich ein drehbares Blockierelement 29 mit einer ellipsenförmigen Außenkontur 30 angeordnet. Dieses ist zwischen einer in Fig. 2 dargestellten Sperrstellung und einer nicht dargestellten Freigabestellung verdrehbar. An dem Verschlussabschnitt 23 des Verschlusselements 3 ist eine Durchlassöffnung in Form eines Langlochs 31 angeordnet. Das Langloch 31 weist eine an die Außenkontur 30 des Blockierelements 29 angepasste Innenkontur 32 auf.

Bei der Nutzung des Hühnerfutterautomaten 1 verschiebt das Huhn das Betätigungselement 4 beispielsweise mit einem Fuß von der Ausgangstellung in die Endstellung, sodass das Verschlusselement 3 von der Schließstellung in die Öffnungsstellung verstellt wird. Hierbei befindet sich das Blockierelement 29 in der Freigabestellung und wird bei der Verstellung des Verschlusselements 3 durch das Langloch 31 durchgeführt. Durch die Verstellung des Verschlusselements 3 wird die Entnahmeöffnung 11 freigegeben und das Huhn kann Futter aus dem Ausgabebereich 7 entnehmen. Über die Öffnung 6 rutscht in Abhängigkeit von der Höhe H der Öffnung 6 und der Entnahmegeschwindigkeit neues Futter aus dem Vorratsbereich 5 in den Ausgabebereich 7 nach. Durch die Schenkelfedern 28 wird das Verschlusselement 3 von der Öffnungsstellung in die Schließstellung verstellt, sobald das Huhn den Fuß von dem Betätigungselement 4 abstellt und keine Kraft mehr auf das Betätigungselement 4 ausübt.

Zum Anlernen eines Huhns oder mehrerer Hühner bei einer Neubesatzung einer Stallung wird das Verschlusselement 3 durch eine Verstellung des Blockierelements 29 von der Freigabestellung in die Sperrstellung verstellt, sodass eine Verstellung des Verschlusselements 3 von der Öffnungsstellung in die Schließstellung verhindert wird.

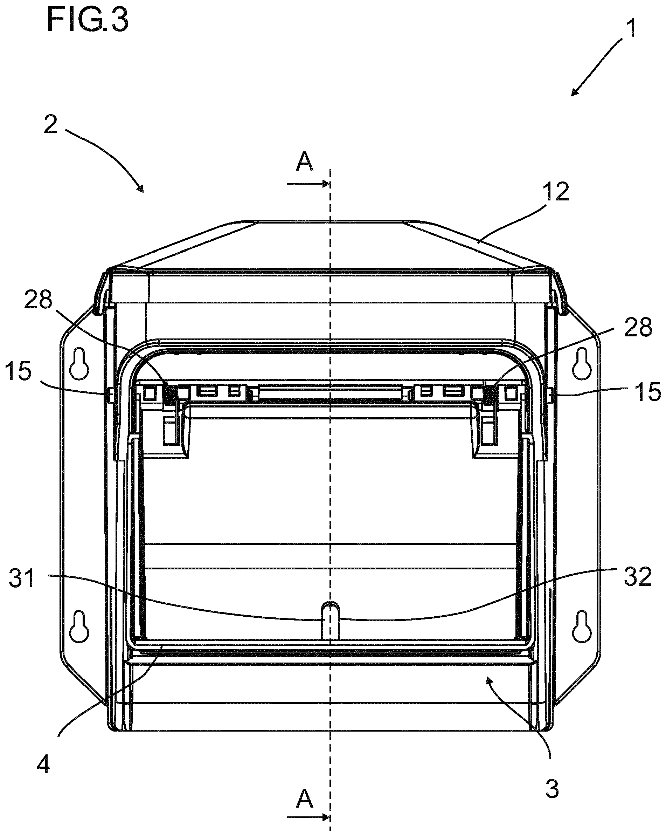

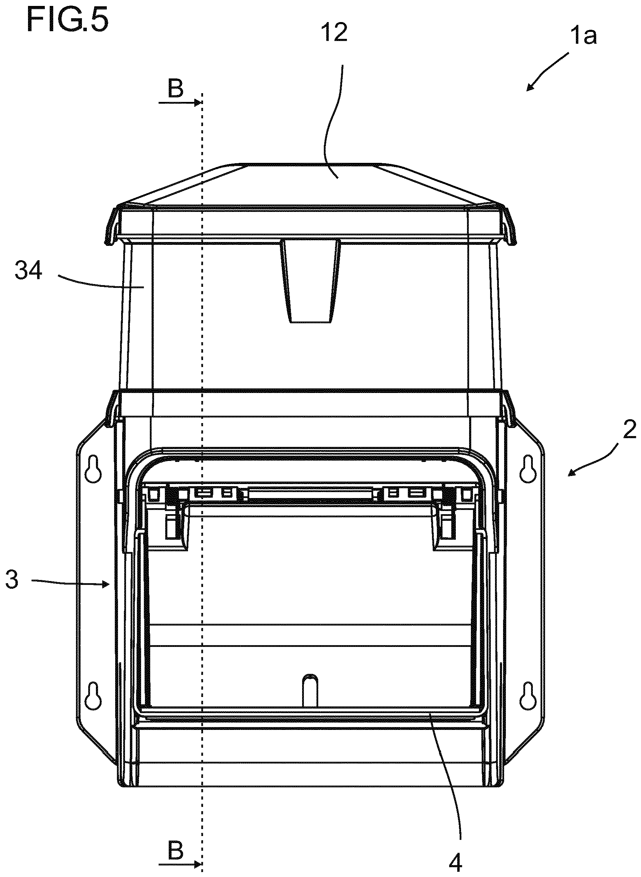

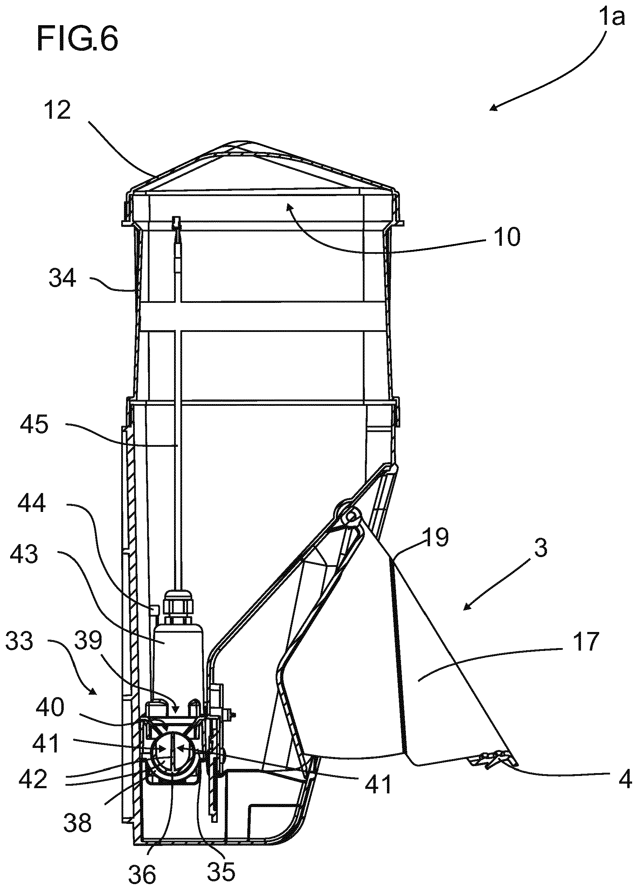

Für den in Figur 5 und 6 gezeigten Hühnerfutterautomat 1a, der eine zweite Ausführungsform des Hühnerfutterautomaten 1 darstellt, werden für gleiche Bauteile gleiche Bezugszeichen verwendet. Der Hühnerfutterautomat 1a unterscheidet sich von dem Hühnerfutterautomaten 1 gemäß Fig. 1 bis 4 durch eine in dem Vorratsbereich 5 angeordnete Dosiereinheit 33 und eine an dem Vorratsbehälter 2 angeordnete Speichereinheit 34.

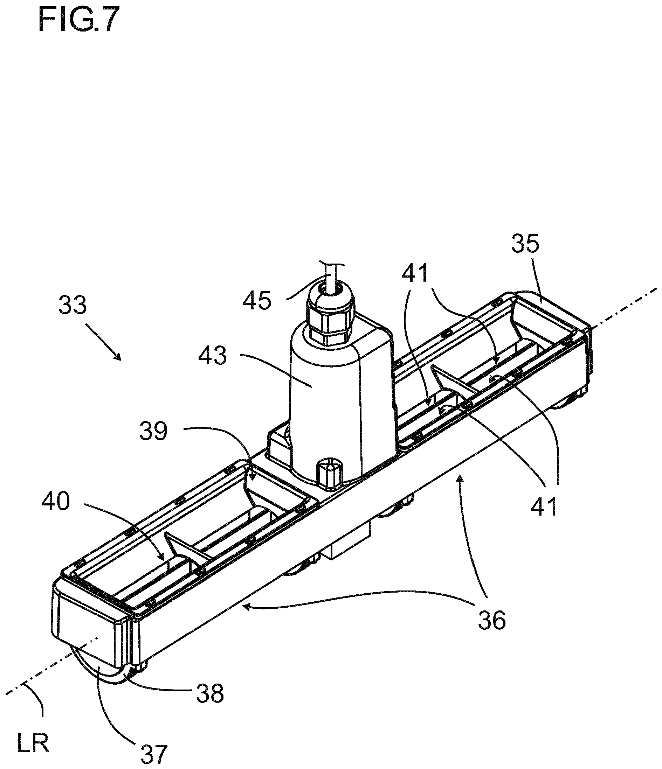

Die Dosiereinheit 33 weist gemäß Fig. 6 und 7 einen quaderartigen Grundkörper 35 auf und ist in Richtung der Längsachse LV des Vorratsbehälters 2 beabstandet zu der Öffnung 6 kraftschlüssig mittels eines Pressverbands an dem Vorratsbehälter 2 angeordnet. Ferner weist die Dosiereinheit 33 zwei parallel zur der Rotationsachse R des Verschlusselements 3 angeordnete zylinderartig ausgebildete Rotationselemente 36 auf. Die Rotationselemente 36 weisen jeweils einen sich in Richtung einer Längsachse LR der Rotationselemente 36 zwischen zwei Stirnflächen 37 erstreckenden kreisförmigen Querschnitt auf. Die Rotationselemente 36 sind jeweils an dem Grundkörper 35 in zwei Lagerelementen 38 um ihre Längsachse LR drehbar gelagert. Die Lagerelemente 38 grenzen jeweils an die Stirnflächen 37 der Rotationselemente 36 an. An dem Grundkörper 35 sind vier Rieselöffnungen 39 angeordnet, von denen jeweils zwei einem Rotationselement 36 zugeordnet sind.

Die Rotationselemente 36 weisen jeweils einen in radialer Richtung der Längsachse LR der Rotationselemente 36 offenen Hohlraum 40 und zwei den Hohlraum 40 in vier Aufnahmekammern 41 aufteilende als Trennwände 42 ausgebildete Teilelemente auf. Zum Antrieb der Rotationselemente 36 ist zwischen den in Richtung der Rotationsache R des Verschlusselements 3 beabstandet zueinander angeordneten Rotationselementen 36 eine Antriebseinheit in Form eines Elektromotors 43 angeordnet. Ferner weist der Hühnerfutterautomat 1a ein in dem Vorratsbereich 5 angeordnetes Sensorelement in Form eines kapazitiven Sensors 44 zur Überwachung des Füllstands des Vorratsbereichs 5 auf. Die Dosiereinheit 33 ist über ein Stromkabel 45 mit einer separaten Steuereinheit verbunden. Durch die Dosiereinheit 33 ist die von dem Vorratsbereich 5 in Richtung des Ausgabebereichs 7 geförderte Futtermenge einstellbar.

Alle in Verbindung mit den einzelnen Ausführungsformen der Erfindung erläuterten Merkmale können in unterschiedlicher Kombination in dem Hühnerfutterautomat vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmale nicht beschränkt.

### Bezugszeichenliste

- 1,1a: Hühnerfutterautomat
- 2: Vorratsbehälter
- 3: Verschlusselement
- 4: Betätigungselement
- 5: Vorratsbereich
- 6: Öffnung
- 7: Ausgabebereich
- 8: Trennelement
- 9: Gehäuse
- 10: Einfüllöffnung
- 11: Entnahmeöffnung
- 12: Deckel
- 13: Seitenfläche
- 14: Ausnehmung
- 15: Schraube/ Befestigungsmittel
- 16: Lagerelement/Lagerabschnitt
- 17: flächige Strebe
- 18: Erhebung/Profilierung
- 19: Abkantung/Anschlagselement
- 20: Stützelement
- 21: Aufnahmeabschnitt
- 22: Vorsprung
- 23: Verschlussabschnitt
- 24: Biegung
- 25: Krümmung
- 26: Verstellelement
- 27: Schraube/Befestigungsmittel
- 28: Federelement/Schenkelfeder
- 29: Blockierelement
- 30: Außenkontur
- 31: Durchlassöffnung/Langloch
- 32: Innenkontur
- 33: Dosiereinheit
- 34: Speichereinheit
- 35: Grundkörper
- 36: Rotationselement
- 37: Stirnfläche
- 38: Lagerelement
- 39: Rieselöffnung
- 40: Hohlraum
- 41: Aufnahmekammer
- 42: Trennwand/Teilelement
- 43: Elektromotor/Antriebseinheit
- 44: Sensorelement/kapazitiver Sensor
- 45: Stromkabel
- A1: Abstand des Betätigungselements zum Vorratsbehälter in der Ausgangsstellung
- A2: Abstand des Betätigungselements zum Vorratsbehälter in der Endstellung
- H: Höhe der Öffnung
- LV: Längsachse des Vorratsbehälters
- LR: Längsachse des Rotationselements
- R: Rotationsachse des Verschlusselements
- VE: Vertikalebene

## Patentansprüche

1. Hühnerfutterautomat, mit
- einem einen Vorratsbereich (5) zur Aufnahme von rieselfähigem Futter und einen mit dem Vorratsbereich (5) verbundenen Ausgabebereich (7) aufweisenden Vorratsbehälter (2), wobei
- der Vorratsbereich und der Ausgabebereich derart miteinander verbunden sind, dass in dem Vorratsbereich aufgenommenes Futter in Richtung auf den Ausgabebereich nachrutscht, sobald ein Huhn Futter aus dem Ausgabebereich entnimmt, und
- einem an dem Vorratsbehälter (2) gelagerten, zwischen einer den Ausgabebereich (7) für das Huhn freigebenden Öffnungsstellung und einer den Ausgabebereich (7) verschließenden Schließstellung verstellbaren Verschlusselement (3) mit einem beabstandet zu dem Vorratsbehälter (2) angeordneten Betätigungselement (4), wobei
- das Verschlusselement (3) in einem unbelasteten Zustand des Betätigungselements (4) in der Schließstellung angeordnet ist, wobei
- das Verschlusselement in der Schließstellung derart an dem Vorratsbehälter angeordnet ist, dass der Ausgabebereich des Vorratsbehälters durch das Verschlusselement verdeckt wird, wobei
- das Betätigungselement derart ausgebildet und/oder an dem Verschlusselement angeordnet ist, dass ein Huhn das Betätigungselement zum Freigeben des Ausgabebereichs und zur Entnahme von Futter mit einem Fuß verstellen kann,
wobei
- das Verschlusselement (3) durch eine Verstellung des Betätigungselements (4) relativ zu dem Vorratsbehälter (2) um eine Rotationsachse (R) schwenkbar zwischen der Öffnungsstellung und der Schließstellung verstellbar ist, **dadurch gekennzeichnet, dass**
- das Betätigungselement (4) zur Verstellung des Verschlusselements (3) aus der Schließstellung in die Öffnungsstellung in Richtung auf den Vorratsbehälter (3) verstellbar ist.

2. Hühnerfutterautomat nach Anspruch 1, **dadurch gekennzeichnet, dass** das Verschlusselement (3) derart ausgebildet ist, dass das Betätigungselement (4) bei der Verstellung zwischen einer der Öffnungsstellung zugeordneten Endstellung und einer der Schließstellung zugeordneten Ausgangsstellung auf einer Bewegungsbahn mit einem konstanten Abstand zu der Rotationsachse (R) des Verschlusselements (3) verstellbar ist.

3. Hühnerfutterautomat nach Anspruch 2, **dadurch gekennzeichnet, dass** sich die Bewegungsbahn des Betätigungselements (4) in einer senkrecht zu der Rotationsachse (R) angeordneten Vertikalebene (VE) erstreckt.

4. Hühnerfutterautomat nach einem oder mehrerer der vorhergehenden Ansprüche, **dadurch gekennzeichnet, dass** das Verschlusselement (3) ein in der Öffnungsstellung an dem Vorratsbehälter (2) anliegendes Anschlagselement (19) aufweist.

5. Hühnerfutterautomat nach einem oder mehrerer der vorhergehenden Ansprüche, **dadurch gekennzeichnet, dass** der Vorratsbehälter (2) ein den Vorratsbereich (5) von dem Ausgabebereich (7) abgrenzendes Trennelement (8) aufweist.

6. Hühnerfutterautomat nach Anspruch 5 **dadurch gekennzeichnet, dass** das Trennelement (8) ein Verstellelement (26) aufweist, dass derart gegenüber dem Vorratsbehälter (2) verstellbar ist, dass eine den Ausgabebereich (7) mit dem Vorratsbereich (5) verbindende Öffnung (6) zur Anpassung der Rieselfähigkeit des Futters verkleinert und/oder vergrößert werden kann.

7. Hühnerfutterautomat nach einem oder mehrerer der vorhergehenden Ansprüche, **dadurch gekennzeichnet, dass** das Verschlusselement (3) in Richtung auf die Schließstellung vorgespannt ist.

8. Hühnerfutterautomat nach einem oder mehrerer der vorhergehenden Ansprüche, **gekennzeichnet durch** ein das Verschlusselement (3) in der Öffnungsstellung gegenüber dem Vorratsbehälter (2), insbesondere dem Trennelement (8), festlegendes Blockierelement (29).

9. Hühnerfutterautomat nach einem oder mehrerer der vorhergehenden Ansprüche, **gekennzeichnet durch** eine an dem Vorratsbehälter (2), bevorzugt in dem Vorratsbereich (5), anordbare Dosiereinheit (33).

10. Hühnerfutterautomat nach Anspruch 9, **dadurch gekennzeichnet, dass** die Dosiereinheit (33) mindestens ein, bevorzugt parallel zu der Rotationsachse (R) angeordnetes Rotationselement (36) zur Förderung des Futters aus dem Vorratsbereich (5) in den Ausgabebereich (7) aufweist.

11. Hühnerfutterautomat nach einem oder mehrerer der vorhergehenden Ansprüche, **gekennzeichnet durch** ein Sensorelement (44) zur Überwachung des Füllstands des Vorratsbereichs (5).

12. Hühnerfutterautomat nach einem oder mehrerer der vorhergehenden Ansprüche, **dadurch gekennzeichnet, dass** das Betätigungselement (4) eine Profilierung (18) zur Erhöhung des Reib- und/oder Formwiderstands für das Huhn aufweist.

13. Hühnerfutterautomat nach einem oder mehrerer der vorhergehenden Ansprüche, **gekennzeichnet durch** eine den Vorratsbereich (5) des Vorratsbehälters (2) erweiternde Speichereinheit (34).

14. Hühnerfutterautomat nach Anspruch 13, **dadurch gekennzeichnet, dass** der Vorratsbehälter (2) zur formschlüssigen Verbindung mit der Speichereinheit (34) ausgebildet ist.

15. Hühnerfutterautomat nach einem oder mehrerer der vorhergehenden Ansprüche, **dadurch gekennzeichnet, dass** der Vorratsbehälter (2) im Ausgabebereich (7) mindestens ein, bevorzugt rippenartig ausgebildetes Stützelement (20) aufweist.

## Claims

1. Chicken feeder, with
- a storage area (5) for receiving free-flowing feed and a dispensing area (7) which is connected to the storage area (5) and has a storage container (2), wherein
- the storage area and the dispensing area are connected to one another in such a way that feed received in the storage area slides towards the dispensing area as soon as a chicken removes feed from the dispensing area, and
- a closure element (3) which is mounted on the storage container (2) and can be adjusted between an opening position releasing the dispensing area (7) for the chicken and a closing position closing the dispensing area (7), with an actuating element (4) arranged at a distance from the storage container (2), wherein
- the closure element (3) is arranged in the closed position in an unloaded state of the actuating element (4), wherein
- the closure element is arranged on the storage container in the closed position in such a way that the dispensing region of the storage container is covered by the closure element, wherein
- the actuating element is designed and/or arranged on the closure element in such a way that a chicken can move the actuating element with one foot to release the dispensing area and to remove food, wherein
- the closure element (3) can be pivoted relative to the storage container (2) about an axis of rotation (R) between the open position and the closed position by adjusting the actuating element (4),
**characterized in that**
- the actuating element (4) for adjusting the closure element (3) can be moved from the closed position to the open position in the direction of the storage container (3).

2. Automatic chicken feeder according to claim 1, **characterized in that** the closure element (3) is designed in such a way that the actuating element (4) can be adjusted on a path of movement at a constant distance from the axis of rotation (R) of the closure element (3) during the adjustment between an end position assigned to the opening position and an initial position assigned to the closing position.

3. Chicken feeder according to claim 2, **characterized in that** the path of movement of the actuating element (4) extends in a vertical plane (VE) arranged perpendicular to the axis of rotation (R).

4. Chicken feeder according to one or more of the preceding claims, **characterized in that** the closure element (3) has a stop element (19) bearing against the storage container (2) in the open position.

5. Chicken feeder according to one or more of the preceding claims, **characterized in that** the storage container (2) has a separating element (8) delimiting the storage area (5) from the dispensing area (7).

6. Chicken feeder according to claim 5, **characterized in that** the separating element (8) has an adjusting element (26) which can be adjusted relative to the storage container (2) in such a way that an opening (6) connecting the dispensing area (7) to the storage area (5) can be reduced and/or enlarged in order to adjust the pourability of the feed.

7. Chicken feeder according to one or more of the preceding claims, **characterized in that** the closure element (3) is biased in the direction of the closed position.

8. Chicken feeder according to one or more of the preceding claims, **characterized by** a blocking element (29) fixing the closure element (3) in the open position relative to the storage container (2), in particular the separating element (8).

9. Chicken feeder according to one or more of the preceding claims, **characterized by** a dosing unit (33) which can be arranged on the storage container (2), preferably in the storage area (5).

10. Chicken feeder according to claim 9, **characterized in that** the dosing unit (33) has at least one rotating element (36), preferably arranged parallel to the axis of rotation (R), for conveying the feed from the storage area (5) into the dispensing area (7).

11. Chicken feeder according to one or more of the preceding claims, **characterized by** a sensor element (44) for monitoring the filling level of the storage area (5).

12. Chicken feeder according to one or more of the preceding claims, **characterized in that** the actuating element (4) has a profiling (18) for increasing the frictional and/or form resistance for the chicken.

13. Chicken feeder according to one or more of the preceding claims, **characterized by** a storage unit (34) extending the storage area (5) of the storage container (2).

14. Chicken feeder according to claim 13, **characterized in that** the storage container (2) is designed for positive connection to the storage unit (34).

15. Chicken feeder according to one or more of the preceding claims, **characterized in that** the storage container (2) has at least one, preferably rib-like, support element (20) in the dispensing area (7).

## Revendications

1. Distributeur de nourriture de poulets, avec
- une zone de stockage (5) destinée à recevoir des aliments à écoulement libre et une zone de distribution (7) reliée à la zone de stockage (5) et dotée d'un récipient de stockage (2), dans laquelle
- la zone de stockage et la zone de distribution sont reliées l'une à l'autre de manière à ce que les aliments reçus dans la zone de stockage glissent vers la zone de distribution dès qu'un poulet retire des aliments de la zone de distribution, et
- un élément de fermeture (3) monté sur le récipient de stockage (2) et réglable entre une position d'ouverture libérant la zone de distribution (7) pour le poulet et une position de fermeture fermant la zone de distribution (7), avec un élément d'actionnement (4) disposé à une certaine distance du récipient de stockage (2), dans lequel
- l'élément de fermeture (3) est disposé en position fermée lorsque l'élément d'actionnement (4) n'est pas sollicité, dans lequel
- l'élément de fermeture est disposé sur le récipient de stockage en position fermée de telle sorte que la zone de distribution du récipient de stockage est couverte par l'élément de fermeture, dans lequel
- l'élément d'actionnement est conçu et/ou disposé sur l'élément de fermeture de manière à ce qu'un poulet puisse déplacer l'élément d'actionnement avec un pied pour libérer la zone de distribution et retirer les aliments, dans lequel
- l'élément de fermeture (3) peut être pivoté par rapport au récipient de stockage (2) autour d'un axe de rotation (R) entre la position ouverte et la position fermée en ajustant l'élément d'actionnement (4),
**caractérisé par le fait que**
- l'élément d'actionnement (4) permettant de régler l'élément de fermeture (3) peut être déplacé de la position fermée à la position ouverte en direction du conteneur de stockage (3).

2. Distributeur de nourriture de poulets selon la revendication 1, **caractérisé en ce que** l'élément de fermeture (3) est conçu de manière à ce que l'élément d'actionnement (4) puisse être ajusté sur une trajectoire de mouvement à une distance constante de l'axe de rotation (R) de l'élément de fermeture (3) pendant l'ajustement entre une position finale assignée à la position d'ouverture et une position initiale assignée à la position de fermeture.

3. Distributeur de nourriture de poulets selon la revendication 2, **caractérisé en ce que** la trajectoire de déplacement de l'élément d'actionnement (4) s'étend dans un plan vertical (VE) disposé perpendiculairement à l'axe de rotation (R).

4. Distributeur de nourriture de poulets selon l'une ou plusieurs des revendications précédentes, **caractérisé par le fait que** l'élément de fermeture (3) comporte un élément de butée (19) en appui sur le récipient de stockage (2) en position ouverte.

5. Distributeur de nourriture de poulets selon l'une ou plusieurs des revendications précédentes, **caractérisé par le fait que** le récipient de stockage (2) comporte un élément de séparation (8) délimitant la zone de stockage (5) de la zone de distribution (7).

6. Distributeur de nourriture de poulets selon la revendication 5, **caractérisé par le fait que** l'élément de séparation (8) comporte un élément de réglage (26) qui peut être ajusté par rapport au récipient de stockage (2) de manière à ce qu'une ouverture (6) reliant la zone de distribution (7) à la zone de stockage (5) puisse être réduite et/ou élargie afin d'ajuster l'aptitude à la verse de l'aliment.

7. Distributeur de nourriture de poulets selon l'une ou plusieurs des revendications précédentes, **caractérisé par le fait que** l'élément de fermeture (3) est sollicité en direction de la position fermée.

8. Distributeur de nourriture de poulets selon une ou plusieurs des revendications précédentes, **caractérisé par** un élément de blocage (29) fixant l'élément de fermeture (3) en position ouverte par rapport au récipient de stockage (2), en particulier par rapport à l'élément de séparation (8).

9. Distributeur de nourriture de poulets selon une ou plusieurs des revendications précédentes, **caractérisé par** une unité de dosage (33) qui peut être disposée sur le récipient de stockage (2), de préférence dans la zone de stockage (5).

10. Distributeur de nourriture de poulets selon la revendication 9, **caractérisé par le fait que** l'unité de dosage (33) possède au moins un élément rotatif (36), de préférence disposé parallèlement à l'axe de rotation (R), pour transporter l'aliment de la zone de stockage (5) à la zone de distribution (7).

11. Distributeur de nourriture de poulets selon l'une ou plusieurs des revendications précédentes, **caractérisé par** un élément capteur (44) pour surveiller le niveau de remplissage de la zone de stockage (5).

12. Distributeur de nourriture de poulets selon l'une ou plusieurs des revendications précédentes, **caractérisé par le fait que** l'élément d'actionnement (4) a un profil (18) pour augmenter la résistance au frottement et/ou à la déformation pour le poulet.

13. Distributeur de nourriture de poulets selon l'une ou plusieurs des revendications précédentes, **caractérisé par** une unité de stockage (34) prolongeant la zone de stockage (5) du récipient de stockage (2).

14. Distributeur de nourriture de poulets selon la revendication 13, **caractérisée par le fait que** le récipient de stockage (2) est conçu pour être relié par complémentarité de forme à l'unité de stockage (34).

15. Distributeur de nourriture de poulets selon l'une ou plusieurs des revendications précédentes, **caractérisé par le fait que** le récipient de stockage (2) comporte au moins un élément de support (20), de préférence en forme de nervure, dans la zone de distribution (7).
